# EUROPEAN PATENT SPECIFICATION

(11) **EP 4 450 252 B1**
(45) Date of publication and mention of the grant of the patent: **22.04.2026**
(21) Application number: 24171290.0
(22) Date of filing: 19.04.2024
(51) Int. Cl.: B29C 49/00, B29C 49/06, B29C 49/10, B29C 49/02, B29K 25/00, B29K 91/00, B29K 105/26, B29L 31/00, C08J 3/22, C08K 5/29, C08L 91/06

(54) **METHOD OF PRODUCING STRETCH-BLOW-MOLDED ARTICLE**
VERFAHREN ZUR HERSTELLUNG EINES STRECKBLASGEFORMTEN ARTIKELS
PROCÉDÉ DE PRODUCTION D'UN ARTICLE MOULÉ PAR SOUFFLAGE-ÉTIRAGE

(30) Priority: 21.04.2023 JP 2023070429
(43) Date of publication of application: 23.10.2024
(73) Proprietor: CANON KABUSHIKI KAISHA, Tokyo 146-8501 (JP)
(72) Inventor: KODAMA, Yasunori, Tokyo, 146-8501 (JP); ASHIBE, Tsunenori, Tokyo, 146-8501 (JP); DOI, Yohei, Tokyo, 146-8501 (JP)
(74) Representative: TBK

(56) References cited:
- EP-A1- 2 799 488
- WO-A1-2006/062075
- WO-A1-2007/040243
- JP-A- 2012 007 079
- JP-A- 2012 144 737
- JP-A- 2018 193 471
- JP-A- H0 667 536
- KR-A- 20220 128 646
- US-A1- 2009 258 982

## Description

### BACKGROUND OF THE INVENTION

### Field of the Invention

The present disclosure relates to a method of producing a stretch-blow-molded article.

### Description of the Related Art

In an electrophotographic image forming apparatus, since toner bottles for supplying toner and the like need to be strong enough not to break when dropped, molded products obtained by injection-stretch-blow molding a polystyrene such as an impact-resistant polystyrene (high impact polystyrene; hereinafter sometimes abbreviated as "HIPS"), which is a styrene-based resin, in addition to polyethylene terephthalate, which is a polyester resin, are also often used. For example, Japanese Patent Laid-Open No. H06-067536 discloses a toner container molded by blow molding using polystyrene resin.

In recent years, in order to protect the environment, it has become common practice to collect thermoplastic resin products and their parts and then regenerate and recycle them by temporarily changing their original shapes. Here, as a method of recycling thermoplastic resins such as polystyrene, as described in paragraph [0002] in Japanese Patent Laid-Open No. 2009-001693, chemical recycling and material recycling are known.

Chemical recycling requires a multi-step process as disclosed in Japanese Patent Laid-Open No. 2009-001693, which requires decomposition facilities and purification processing facilities, resulting in high recycling costs. In addition, it also has a large environmental burden.

On the other hand, when polystyrene obtained through material recycling (hereinafter also referred to as "material-recycled polystyrene") is regenerated and processed, polymer chains of the polystyrene are partially cleaved due to a shear stress applied to the polystyrene at high temperatures, which reduces the molecular weight, and causes problems such as a decrease in the impact strength of the product. In addition, when polystyrene that has been partially reduced in molecular weight in this manner is used, the stretchability during stretch-blow molding may vary because there are many low-molecular-weight and high-molecular-weight components mixed together, and blow molding defects are more likely to occur.

As a method of compensating for drawbacks of such material-recycled products, a method of using material-recycled materials in which a larger amount of virgin materials than plastic waste is mixed to reduce the content of the material-recycled products, as described in paragraph [0005] in Japanese Patent Laid-Open No. 2009-001693, may be exemplified.

JP 2012 007079 A describes a polylactic acid-based resin including 0.2-10 pts.mass of a carbodiimide compound and 0.1-3 pts.mass of wax based on 100 pts.mass of a polylactic acid resin.

WO 2007/040243 A1 describes a biodegradable resin composition comprising a biodegradable polyester resin, a layered silicate, and at least one component selected from a polyether phosphate ester compound, a polar wax and jojoba oil.

EP 2 799 488 A1 describes a 4-methyl-1-pentene (co)polymer composition comprising a specific 4-methyl-1-pentene (co)polymer (A) and a specific 4-methyl-1-pentene/±-olefin copolymer (B) in a specific ratio.

JP 2012 144737 A describes a polyester resin composition obtained by melt-mixing two or more polyester resins. One of the two or more polyester resins is reprocessed resin of PET bottles, and the other of the two or more polyester resin is a polyester resin in which at least one or more selected from the group consisting of isophthalic acid, diethylene glycol, neopentyl glycol, 1,4-cyclohexanedimethanol, 1,2-propanediol, 1,3-propanediol and 2-methyl-1,3-propanediol is copolymerized as a copolymerization component other than terephthalic acid/ethylene glylcol.

US 2009/258982 A1 describes a biodegradable resin composition comprising 100 parts by mass of a biodegradable polyester resin and 0.1-15 parts by mass of a jojoba oil and/or a polar wax. The biodegradable polyester resin may contain not less than 50% by mass of a plant-based resin. Polylactic acid can be used as the plant-based resin.

JP 2018 193471 A describes a resin composition containing, based on (A) 100 pts.wt. of a resin component containing 30-100 wt.% of a polyphenylene ether resin (a1) and 70-0 wt.% of a styrenic resin (a2), (B) 5-30 pts.wt. of a compound represented by formula (1) and (C) 0.2-5 pts.wt. of a component. The component (C) contains (C1) hydrotalcite and (C2) a carbodiimide compound.

KR 2022 0128646 A describes a thermoplastic polymer composition.

WO 2006/062075 A1 describes a process for producing a polyester resin composition, comprising conducting dry blending of flakes obtained by PET bottle recycling with polyester resin and/or polyester resin composition pellets having a per-pellet surface area of = 300 mm² and weight of = 0.2 g, or per-pellet volume of = 200 mm³ and weight of = 0.2 g and melt kneading of the blend.

JP H06 67536 A describes a container which is used to contain toners containing polyester as a binder resin, further containing a wax component and having 5 to 10mum volume average grain size and which is coated with an antistatic agent on its inside surface. The antistatic agent is dispersed into the material of the container.

JP2012 007079 A, WO 2007/040243 A1, EP 2 799 488 A1, JP 2012 144737 A, US 2009/258982 A1 and WO 2006/062075 A1 all disclose methods in accordance with the preamble of claim 1.

### SUMMARY OF THE INVENTION

However, if the reuse rate is lowered by mixing in a larger amount of virgin materials than plastic waste, since the proportion of recycled materials used decreases, an improvement is necessary in order to adapt to a resource recycling society.

In addition, in material recycling, a process of washing bottles is generally performed. However, bottles may be washed a plurality of times using water, acids, alkalis and the like, and a drying process is also required. Therefore, washing bottles can also increase the environmental burden.

According to the studies performed by the inventors, a material-recycled polystyrene (hereinafter abbreviated as "material-recycled HIPS" or "MR-HIPS") as a result of material recycling of a blow bottle as a toner container made of collected HIPS may have a lower molecular weight as mentioned above. In order to reduce the environmental burden, the inventors simplified or omitted washing of toner bottles to be recycled, and obtained MR-HIPS from toner bottles with toner still attached to the inside and produced toner bottles again using the MR-HIPS.

Thus, they found that, when toners were stored in the toner bottles obtained in this manner, the surfaces of toner particles were sometimes deformed at the contact point between the toner inside the toner bottle and the inner surface of the toner bottle. Toner particles with deformed surfaces may cause development defects such as insufficient transfer during electrophotographic development (when the toner is transferred to the photosensitive drum), and as a result, may cause image density nonuniformity in electrophotographic images.

At least one aspect of the present disclosure is to provide, based on the premise of use of a polystyrene comprising a wax as a raw material, a method of producing a stretch-blow-molded article that can inhibit the wax from being transferred to the surface of the blow-molded article.

The present invention in its first aspect provides a method of producing a stretch-blow-molded article as specified in claims 1 to 10.

According to at least one aspect of the present disclosure, based on the premise of use of a polystyrene comprising a wax as a raw material, there is provided a method of producing a stretch-blow-molded article that can inhibit the wax from being transferred to the surface of the blow-molded article. In addition, according to at least one aspect of the present disclosure, there are provided a resin composition that contributes to inhibition of the wax from being transferred to the surface of the molded product, a method of producing the resin composition, pellets and a method of producing the pellets.

Further features of the present invention will become apparent from the following description of exemplary embodiments with reference to the attached drawings.

### BRIEF DESCRIPTION OF THE DRAWINGS

FIG. 1 is a schematic diagram of an image forming apparatus;
FIG. 2 is a schematic diagram illustrating a method for molding a preform;
FIG. 3 is a schematic diagram illustrating a blow molding method;
FIG. 4 is a schematic diagram of one-stage method blow molding.
FIG. 5 is a schematic diagram showing a procedure of transferring a wax component to a surface.
FIG. 6 is a schematic diagram of a blow bottle.

### DESCRIPTION OF THE EMBODIMENTS

In the present disclosure the notations "from XX to YY" and "XX to YY" representing a numerical value range signify, unless otherwise specified, a numerical value range that includes the lower limit and the upper limit of the range, as endpoints. In a case where numerical value ranges are described in stages, the upper limits and the lower limits of the respective numerical value ranges can be combined arbitrarily.

The inventors speculate that the reason why the surface of the toner stored in the toner bottle molded using MR-HIPS obtained from a toner bottle with toner still attached is deformed as follows. That is, it is thought that a wax comprised in the toner is mixed into the toner bottle. Moreover, it is thought that at least a part of the mixed wax is present on the inner surface of the toner bottle. Furthermore, it is thought that, when the toner stored in the toner bottle comes into contact with the wax exposed on the inner surface of the toner bottle, the surface of toner particles is deformed. Hereinafter, the phenomenon of deformation of the surface of toner particles due to the wax will be referred to as chemical attack.

In the procedure of obtaining a stretch-blow-molded article from raw materials comprising a material-recycled polystyrene, the stretch-blow-molded article may be kept at a temperature equal to or higher than the glass transition temperature (Tg) of the polystyrene. Since the toner component wax has a low molecular weight (a molecular weight of about 300 to 1,500), the wax has a low viscosity while the polystyrene has a temperature equal to or higher than the glass transition temperature. In addition, the polystyrene is also in a state in which molecules are likely to move at Tg or higher. Therefore, the wax is thought to be likely to transfer to the surface (the surface in contact with the atmosphere) of the blow-molded article.

Therefore, it is thought that more wax is present on the surface of the stretch-blow-molded article molded from raw materials comprising a material-recycled polystyrene derived from the toner bottle. As a result, it is thought that the stretch-blow-molded article is more likely to cause chemical attack on substances in contact with the surface.

Therefore, the inventors discovered that the development of a technology for obtaining a stretch-blow-molded article from raw materials comprising a material-recycled polystyrene derived from a toner bottle, which is a stretch-blow-molded product that does not allow a wax to be easily transferred to the surface of the stretch-blow-molded article and that does not cause chemical attacks on substances in contact with the surface is necessary. Based on such recognition, the inventors conducted repeated studies, and as a result, found that the following method of producing a stretch-blow-molded article is effective in obtaining a stretch-blow-molded article in which transfer of a wax to its surface can be inhibited.

That is, the method comprises a process of producing a preform from a melt-kneaded product of a resin mixture comprising at least a wax, a styrene-based resin and a carbodiimide compound and a process of stretch-blow molding the preform to produce the stretch-blow-molded article.

Examples of implementations for carrying out the present disclosure will be explained next in detail with reference to accompanying drawings. However, the scope of the present invention is not limited to the following embodiments. In the explanation that follows, unless noted otherwise, the notation "%" signifies "mass%".

### Preform

A stretch-blow-molded article is produced by stretch-blow molding a preform. The preform is produced using a melt-kneaded product of a resin mixture comprising at least a wax, a styrene-based resin and a carbodiimide compound. That is, the preform is formed of a resin composition comprising the melt-kneaded product. Therefore, the stretch-blow-molded article according to the present disclosure obtained by stretch-blow molding the preform is also formed of the resin composition. The method of producing a preform will be described below in detail.

Here, "melt-kneading" includes applying a shear force when the resin mixture is heated and has flowability. Specifically, for example, it includes applying a shear force when the resin mixture is heated to a temperature equal to or higher than the glass transition temperature of the styrene-based resin and the styrene-based resin has flowability, and at least a part of the wax melts or at least a part of the carbodiimide compound melts, or at least a part of the wax and at least a part of the carbodiimide compound melt. Moreover, "melt-kneaded product" includes those obtained by the above "melt-kneading."

The styrene-based resin preferably comprises polystyrene. Examples of polystyrenes include at least one selected from the group consisting of high impact polystyrene (HIPS) and styrene-based alloys to which toner is attached. Examples of styrene-based alloys include polymer alloys whose main raw materials are acrylonitrile styrene (AS) and general purpose polystyrene (GPPS), and specifically, for example, alloys of polypropylene and polystyrene (PP/PS), and alloys of polyphenylene ether and polystyrene (PPE/PS) may be exemplified. The styrene-based resin preferably comprises high impact polystyrene (HIPS).

A carbodiimide compound has at least one carbodiimide group represented by "-N=C=N-" in the molecule. Examples of carbodiimide compounds include carbodiimides and polycarbodiimides.

The stretch-blow-molded article can be used as a toner bottle. When a stretch-blow-molded article is molded using MR-HIPS obtained from raw materials to which toner is attached, and the toner is incorporated into the obtained stretch-blow-molded article, the wax in the toner comprised in MR-HIPS tends to cause chemical attack on the surface of the incorporated toner.

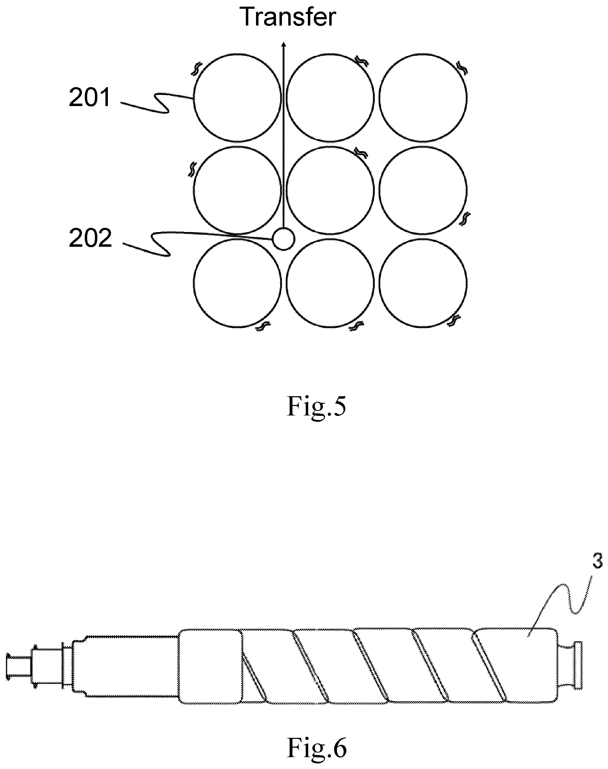

When the wax is comprised in the raw material for the preform, as shown in FIG. 5, in the procedure of molding the stretch-blow-molded article in which a styrene-based resin 201 reaches a temperature equal to or higher than the glass transition temperature, a wax 202 transfers to the surface of the stretch-blow-molded article. When the styrene-based resin reaches a temperature equal to or higher than the glass transition temperature, since the thermal movement of the styrene-based resin becomes active, the low-viscosity wax easily transfers from the gaps in the styrene-based resin to the surface of the stretch-blow-molded article.

When the resin mixture that is the raw material for the preform comprises a carbodiimide compound, it is possible to inhibit the wax from being transferred to the surface of the stretch-blow-molded article. One of the reasons for this is that, when a resin mixture is used to produce a preform, in the process of melt-kneading the resin mixture, a necessary temperature and shear force is applied to the resin mixture in order to plasticize the styrene-based resin. It is thought that, during this procedure, the wax and the carbodiimide compound react, and the wax becomes polymerized. Therefore, the melt-kneaded product that is the result of melt-kneading or the resin composition comprising the melt-kneaded product comprises the polymerized wax. It is thought that, since the polymerized wax has low flowability, it is possible to prevent the wax from being transferred to the surface in molded products made of the melt-kneaded product or the resin composition.

As described above, the reaction between the wax and the carbodiimide compound in the resin mixture is thought to proceed due to heat, a shear force and the like applied to the mixture in the process of melt-kneading the resin mixture when a preform is produced from the resin mixture. Particularly, it is thought that the reaction between the wax and the carbodiimide compound is more likely to proceed when the mixture is heated to a temperature equal to or higher than the glass transition temperature (90°C) of the styrene-based resin in the mixture. It is thought that, according to the above effect, transfer of the wax to the surface of the stretch-blow-molded article is inhibited, and chemical attack that occurs when the stretch-blow-molded article is used as toner bottle is inhibited.

The styrene-based resin may be a material-recycled styrene-based resin or may be a virgin-material styrene-based resin with no molecular weight reduction. However, when the styrene-based resin is a material-recycled polystyrene made from recycled toner bottles, the effects according to the present disclosure become more significant. Therefore, the resin mixture preferably comprises a material-recycled polystyrene, and more preferably comprises a material-recycled high impact polystyrene (MR-HIPS).

The material-recycled polystyrene is obtained using a recycling raw material with toner attached to the surface. The toner comprises a component such as a wax. That is, the material-recycled polystyrene may comprise a wax.

Here, the presence and quantitative determination of imide bonds in the modified styrene-based resin can be performed by measurement using, for example, FT-IR.

### High Impact Polystyrene (HIPS)

As the high impact polystyrene (HIPS), for example, it is preferable to use a mixture of polystyrene with a rubbery polymer or rubbery copolymer. As the rubbery polymer or rubbery copolymer, for example, it is preferable to use at least one polymer selected from the group consisting of polybutadiene, styrene-butadiene copolymers, polyisoprene, butadiene-isoprene copolymers, natural rubber and ethylene-propylene copolymers. That is, the styrene-based resin may be a styrene-based resin composition comprising at least one selected from the group consisting of rubbery polymers and rubbery copolymers in addition to polystyrene. A total content of the rubbery polymers and rubbery copolymers in the styrene-based resin is preferably less than 50 mass%. For example, "FP120" (product name, commercially available from Toyo Styrene Co., Ltd.) can be used. In addition, a mixture with other resins may be used.

The content of the styrene-based resin (for example, HIPS) in the preform is not particularly limited, and is preferably 80 mass% or more and more preferably 90 mass% or more with respect to the mass of the preform. In addition, the content is preferably 99.9 mass% or less and more preferably 99.5 mass% or less. Examples of preferable ranges include 80 to 99.9 mass% and 90 to 99.5 mass%.

### Carbodiimide compound

A carbodiimide compound has at least one carbodiimide group in the molecule. Examples of carbodiimide compounds include carbodiimide and polycarbodiimide.

Examples of carbodiimide compounds include carbodiimides and polycarbodiimides. Carbodiimides and polycarbodiimides have at least one carbodiimide group represented by "-N=C=N-" in the molecule.

A polycarbodiimide can be produced by, for example, heating an organic isocyanate in the presence of a catalyst and performing a decarboxylation condensation reaction. Examples of organic isocyanates include aliphatic diisocyanates, alicyclic diisocyanates, and aromatic diisocyanates. Specific examples of polycarbodiimides include, for example, aromatic polycarbodiimides such as poly(4,4'-diphenylmethanecarbodiimide), poly(p-phenylenecarbodiimide), poly(m-phenylenecarbodiimide), poly(diisopropylphenylcarbodiimide), and poly(triisopropylphenylcarbodiimide); and alicyclic polycarbodiimides such as poly(dicyclohexylmethane carbodiimide). These polycarbodiimides may be used alone, and any combination of two or more thereof may be used.

Among these polycarbodiimides, aliphatic polycarbodiimides are preferable. As the aliphatic polycarbodiimides, for example, those commercially available as "Carbodilite HMV-15CA," "Carbodilite LA-1," and "Carbodilite HMV-5CA-LC" (all are product name, commercially available from Nisshinbo Chemical Inc.) can be used.

As the method of producing a preform formed of the resin composition according to the present disclosure, for example, a method of obtaining a preform using a melt-kneaded product of a wax, a styrene-based resin, and a carbodiimide compound may be exemplified.

In order to sufficiently react a wax and a carbodiimide compound, it is preferable to melt-knead a mixture comprising at least a wax, a styrene-based resin, and a carbodiimide compound to obtain a melt-kneaded product of the mixture. It is thought that the reaction between the wax and the carbodiimide compound is more likely to be promoted according to melt-kneading. Then, a preform can be formed using the melt-kneaded product obtained in this manner, and the preform can be stretch-blow-molded to obtain a stretch-blow-molded article.

Here, as one non-limiting method of obtaining a preform using a melt-kneaded product, for example, after a melt-kneaded product of a mixture comprising at least a wax, a styrene-based resin and a carbodiimide compound is obtained, the melt-kneaded product is pelletized to obtain pellets comprising the obtained melt-kneaded product. Here, a method of obtaining a preform using the obtained pellets may be exemplified. In addition, as another method, a method in which the melt-kneaded product is not pelletized, and a preform is molded subsequent to a process of melt-kneading a resin mixture may be exemplified.

Since a polycarbodiimide has high reactivity, it is preferable to stabilize physical properties of the modified styrene-based resin while controlling the amount of the polycarbodiimide added. For example, a polycarbodiimide may be diluted with an unmodified styrene-based resin in advance, and melt-kneaded at a temperature equal to or higher than the glass transition temperature of the styrene-based resin to prepare masterbatch pellets (second pellets). Then, it is preferable to mold a preform by melt-kneading the obtained second pellets with pellets (first pellets) comprising a wax and an unmodified styrene-based resin, and to additionally obtain a stretch-blow-molded article.

Specifically, for example, first pellets comprising a wax and a styrene-based resin are prepared. The first pellets may be a material-recycled polystyrene, specifically, for example, wax-comprising MR-HIPS pellets obtained by melting and pelletizing the used pulverized HIPS toner bottle product.

Then, separately from the process of preparing first pellets, a carbodiimide compound and another styrene-based resin B are mixed, melt-kneaded and then extruded to form second pellets through a palletization process. A preform is molded by injection molding using the first pellets and the second pellets by a method to be described below, and a stretch-blow-molded article is additionally produced. The styrene-based resin B used when the second pellets are formed is not particularly limited, and may be the same styrene-based resin comprised in the first pellets or a different one.

The dilution ratio when a polycarbodiimide is diluted with an unmodified styrene-based resin in preparing masterbatch pellets is not particularly limited. For example, a polycarbodiimide is diluted preferably 5- to 15-fold and more preferably 10-fold with an unmodified styrene-based resin. When the dilution ratio is set to be within the above range, the concentration of the carbodiimide compound in the second pellets can be within an appropriate range. As a result, when the second pellets are melt-kneaded together with the first pellets, the carbodiimide compound and the wax can be better reacted.

Next, the masterbatch pellets (second pellets) are mixed with unmodified styrene-based resin pellets comprising a wax (first pellets), the mixture is melt-kneaded at a temperature equal to or higher than the melting point of the styrene-based resin, and thus the polycarbodiimide and the wax can react more uniformly. The first pellets and the second pellets may be uniformly stirred using a blender or the like, the obtained pellet mixture may be put into an injection molding machine and molded into a preform. When two types of pellets are uniformly mixed and then put into an injection molding machine, the polycarbodiimide and the unmodified styrene-based resin can react more uniformly during melt-kneading in the injection molding machine. As a result, it is possible to obtain a more homogeneous modified styrene-based resin.

The amount of the carbodiimide compound added with respect to 100 parts by mass of the wax is preferably 114 parts by mass or more and more preferably 227 parts by mass or more. In addition, the amount is preferably 1,141 parts by mass or less and more preferably 570 parts by mass or less. Specifically, the content of the carbodiimide compound in the polystyrene mixture used for molding the preform with respect to 100 parts by mass of the wax is preferably in a range of 114 to 1,141 parts by mass and particularly preferably in a range of 227 to 570 parts by mass.

When the amount of the carbodiimide compound added is within the above range, the wax and the carbodiimide compound can be sufficiently reacted, and bleeding of the wax onto the surface of the stretch-blow-molded article can be more reliably inhibited.

As a method of reacting a polycarbodiimide and a wax, for example, a method of heating a mixture of a polycarbodiimide or masterbatch pellets comprising a polycarbodiimide, and an unmodified styrene-based resin comprising a wax to a temperature equal to or higher than the glass transition temperature of the styrene-based resin and melt-kneading it using an extruder may be exemplified. The temperature during melt-kneading is not particularly limited, and when HIPS is used as the styrene-based resin, 200°C or higher is preferable, and 210°C or higher is more preferable.

The wax is not particularly limited, and for example, waxes that are generally used in the toner can be used. For example, the following waxes may be used.

Aliphatic hydrocarbon-based waxes such as low-molecular-weight polyethylenes, low-molecular-weight polypropylenes, polyolefin copolymers, polyolefin waxes, microcrystalline waxes, paraffin waxes, and fischer tropsch waxes; oxides of aliphatic hydrocarbon-based waxes such as oxidized polyethylene waxes; or block copolymers thereof; vegetable-based waxes such as candelilla wax, carnauba wax, Japan wax, and jojoba wax; animal-based waxes such as beeswax, lanolin, and spermaceti; mineral-based waxes such as ozokerite, ceresin, and petrolatum; waxes mainly composed of aliphatic esters such as montanoic acid ester wax and caster wax; and those obtained by partially or completely deacidifying aliphatic esters such as deacidified carnauba wax. In addition, saturated linear fatty acids such as palmitic acid, stearic acid, montanoic acid, and long chain alkyl carboxylic acids with even longer chain alkyl groups; unsaturated fatty acids such as brassidic acid, eleostearic acid, and parinaric acid; saturated alcohols such as stearyl alcohol, eicosyl alcohol, behenyl alcohol, cannavir alcohol, ceryl alcohol, melissyl alcohol, and alkyl alcohols with even longer chain alkyl groups; polyhydric alcohols such as sorbitol; aliphatic amides such as linoleic acid amide, oleic acid amide, and lauric acid amide; saturated aliphatic bisamides such as methylene bisstearamide, ethylene biscapric acid amide, ethylene bislauric acid amide, and hexamethylene bisstearamide; unsaturated fatty acid amides such as ethylene bisoleic acid amide, hexamethylenebisoleic acid amide, N,N'-dioleyladipic acid amide, and N,N'-dioleylsebacic acid amide; aromatic bisamides such as m-xylene bisstearamide, and N,N'-distearylisophthalic acid amide; aliphatic metal salts (generally referred to as metal soap) such as calcium stearate, calcium laurate, zinc stearate, and magnesium stearate; waxes that are grafted onto an aliphatic hydrocarbon-based wax using a vinyl monomer such as styrene or acrylic acid; partial esterification products of fatty acids such as behenic acid monoglyceride and polyhydric alcohols; and methyl ester compounds having hydroxyl groups obtained by hydrogenating vegetable oils and fats.

These waxes may be used alone or any combination of two or more thereof may be used. It is considered preferable that the waxes comprise an ester-based wax.

In addition, these waxes of which the molecular weight distribution has been sharped using a press sweating method, a solvent method, a recrystallization method, a vacuum distillation method, a supercritical gas extraction method or a melt crystallization method are preferably used. In addition, those from which low-molecular-weight solid fatty acids, low-molecular-weight solid alcohols, low-molecular-weight solid compounds, and other impurities have been removed are also preferably used.

Specific examples include Viscol (registered trademark) 330-P, 550-P, 660-P, and TS-200 (commercially available from Sanyo Chemical Industries, Ltd.), Hi-Wax 400P, 200P, 100P, 410P, 420P, 320P, 220P, 210P, and 110P (commercially available from Mitsui Chemicals, Inc.), Sasol H1, H2, C80, C105, and C77 (commercially available from Schumann Sasol), HNP-1, HNP-3, HNP-9, HNP-10, HNP-11, and HNP-12 (commercially available from Nippon Seiro Co., Ltd.), Unilin (registered trademark) 350, 425, 550, and 700, Unicid (registered trademark) 350, 425, 550, and 700 (commercially available from Toyo Petrolite Co., Ltd.), Japan wax, beeswax, rice wax, candelilla wax, carnauba wax (commercially available from Cerarica Noda Co., Ltd.).

The stretch-blow-molded article may comprise a colorant as necessary. Examples of colorants include carbon black. The content of the colorant in the stretch-blow-molded article is, for example, 0.01 to 0.20 mass%, or 0.02 to 0.10 mass%.

Next, one aspect of a method for producing a stretch-blow-molded article by performing biaxial stretch-blow molding using a preform will be described below.

The method of producing a stretch-blow-molded article comprises the following processes.
(I) a process of producing a preform from a melt-kneaded product of a resin mixture comprising at least a wax, a styrene-based resin and a carbodiimide compound (II) a process of stretch-blow molding the preform to produce the stretch-blow-molded article

### (I) A process of producing a preform from a melt-kneaded product of a resin mixture comprising at least a wax, a styrene-based resin and a carbodiimide compound

An example of a method of producing a preform from a melt-kneaded product of a resin mixture comprising at least a wax, a styrene-based resin and a carbodiimide compound will be described.

The preform is formed of a resin composition comprising a melt-kneaded product of a resin mixture comprising at least a wax, a styrene-based resin and a carbodiimide compound. That is, the method of producing a resin composition comprises a process of obtaining a melt-kneaded product of a resin mixture comprising a wax, a styrene-based resin and a polycarbodiimide compound.

The process of producing the preform may comprise a process of preparing pellets of the melt-kneaded product of the resin mixture comprising a wax and a styrene-based resin. In addition, for example, it may comprise a process of pulverizing a toner bottle comprising a wax- comprising toner and a styrene-based resin, and performing melt-kneading to form pellets. That is, the process of producing the preform may comprise a process of pulverizing a recycled toner bottle with toner attached to obtain a pulverized toner bottle product.

For example, a resin mixture comprising a wax, a styrene-based resin and a carbodiimide compound may be melt-kneaded to form pellets. That is, the method of producing pellets may comprise a process of obtaining a melt-kneaded product of a resin mixture comprising a wax, a styrene-based resin and a carbodiimide compound and a process of pelletizing the melt-kneaded product.

In addition, a toner bottle to which a wax-comprising toner is attached may be pulverized, a carbodiimide compound may be added to the obtained pulverized product, and melt-kneading may be performed to form pellets. The toner bottle comprises a styrene-based resin. That is, the process of producing the preform may comprise a process of melt-kneading raw materials comprising at least a wax, a styrene-based resin and a carbodiimide compound to form pellets. In addition, the process of producing the preform comprise a process of molding the preform from the pellets.

As described above, a carbodiimide compound that is diluted in advance with a small amount of an unmodified styrene-based resin and melt-kneaded may be used. For example, first pellets comprising a wax and a styrene-based resin are prepared. In addition, for example, a toner bottle comprising a wax-comprising toner and a styrene-based resin may be pulverized and melt-kneaded to prepare first pellets. That is, the process of producing the preform may comprise a process of pulverizing a recycled toner bottle with toner attached and performing melt-kneading to prepare first pellets.

Then, separately from the process of forming first pellets, second pellets comprising a melt-kneaded product of a carbodiimide compound and a styrene-based resin B are formed. The obtained first pellets and second pellets can be mixed, and a melt-kneaded product of the pellet mixture can be molded by a method to be described below to produce a preform. That is, the process of producing the preform may comprise a process of melt-kneading a carbodiimide compound and a styrene-based resin B to form second pellets. In addition, the process of producing the preform may comprise a process of mixing the first pellets and the second pellets. The process of producing the preform comprises a preform molding process of molding a pellet mixture comprising the first pellets and the second pellets in the preform.

A device for melt-kneading is not particularly limited, and known devices such as a twin-screw extruder may be used. As the twin-screw extruder, for example, PC-46 (commercially available from Ikegai) can be used. The temperature during melt-kneading is not particularly limited, and for example, the temperature is 200 to 300°C, and preferably 240 to 280°C. When melt-kneading is performed, the wax is easily immobilized in the styrene-based resin having a high molecular weight. In addition, it is thought that the reaction between the wax and the carbodiimide compound is more likely to be promoted.

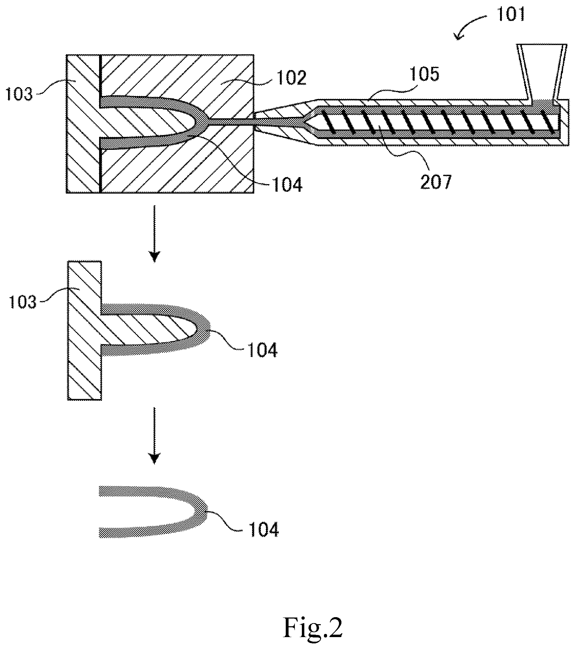

The pellets obtained in the above process are molded to produce a preform. As shown in FIG. 2, a preform 104 having a test tube shape is molded by injection molding. Specifically, a heating cylinder 105 heats materials put into an injection molding machine 101 into a molten state, and an extrusion screw 207 injects the molten materials into preform molds 102 and 103, and removes them from the mold after cooling, and thereby the preform 104 is obtained. In the process of producing the preform, it is preferable to produce a preform by injection molding. That is, the preform molding process preferably comprises a process of injection molding a melt-kneaded product of pellets or a pellet mixture. In addition, the preform preferably has a test tube shape. In the preform molding process, when raw materials are heated, the wax is more likely to be immobilized in the high-molecular-weight styrene-based resin. In addition, it is thought that the reaction between the wax and the carbodiimide compound comprised in the toner is further promoted.

### (II) A process of stretch-blow molding the preform to produce the stretch-blow-molded article

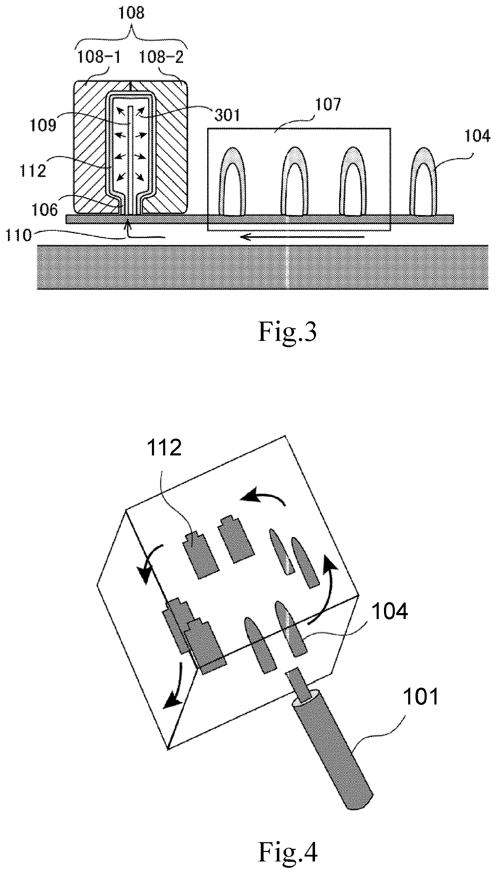

Next, a process of stretch-blow molding the preform to produce the stretch-blow-molded article will be described. As shown in FIG. 3, biaxial-stretch-blowing (biaxial stretch-molding) of the preform 104 is performed. First, the preform 104 is put into a heating furnace 107 and heated to a temperature at which it can be stretched. When the preform is heated in the process of producing a blow-molded article, the wax is more likely to be immobilized in the high-molecular-weight styrene-based resin. In addition, it is thought that the reaction between the wax and the carbodiimide compound comprised in the toner is further promoted.

The heated preform 104 is removed from the heating furnace 107, and placed at an opening of a blow mold 108. Inside the blow mold 108, a cavity is formed by combining a left side mold 108-1 and a right side mold 108-2.

Preferably the heated preform is placed at the mouth of the blow mold within a short time (for instance within 10 seconds), so that the temperature of the heated preform does not drop before the start of a biaxial stretching step.

The heated preform placed in the blow mold 108 is stretched using a stretching rod 109 in the longitudinal direction of the preform. This is called primary stretching. In the primary stretching, it is preferable to introduce a gas so that the preform 104 does not come into contact with the stretching rod 109. The pressure of the gas in this case is called a primary blow pressure.

After the primary stretching is performed, a gas 110 is introduced from a preform opening 106, and the preform is stretched in a lateral direction (a circumferential direction, that is, a direction intersecting the stretching rod 109). This is called secondary stretching. In addition, the pressure of the gas in this case is called a secondary blow pressure. Examples of gases introduced during the primary stretching and the secondary stretching include air, nitrogen, carbon dioxide, and argon.

When these primary stretching and secondary stretching are performed, the preform 104 expands in directions shown by an arrow 301, comes into close contact with the inner wall of the blow mold 108, and cools and solidifies in that state, and a blow-molded article 112 is produced. The molding step preferably includes a step of stretching the preform in a longitudinal direction of the preform using a stretching rod and a step of introducing a gas into the preform stretched in the longitudinal direction and stretching the preform in a circumferential direction.

The blow-molded article 112 is then retrieved, from the blow mold 108, by separating the left die 108-1 and the right die 108-2 of the blow mold 108.

Injection stretch blow molding methods include a single-stage method and a two-stage method. The single-stage method is a method in which residual heat from the preform immediately after retrieval from the mold is exploited to carry out stretch blow molding, as-is or with temperature control. The two-stage method is a method in which the preform is cooled down to room temperature, after which the temperature of the preform is adjusted again, whereupon stretch blow molding is carried out.

That is, the step of molding pellets to produce a preform and the molding step of stretch-blow-molding the preform to produce a stretch-blow-molded article may be performed continuously while maintaining the temperature of the preform. In addition, after the step of molding pellets to produce a preform, a molding step in which the preform is once cooled to room temperature and then stretch-blow-molded to produce a stretch-blow-molded article may be performed.

FIG. 4 shows a schematic diagram of the one-stage method. In the one-stage method, after the preform 104 is injection-molded from the injection molding machine 101, cooling during injection molding is performed for a short time of 10 seconds or shorter so that the preform 104 does not reach the glass transition temperature of styrene-based resin or lower. Then, immediately, heat retention at a blow molding temperature (for example, 90 to 120°C) is performed, and heating and blow molding are performed to produce the blow-molded article 112 in the method. In the one-stage method, a device in which an injection molding device and a blow molding device are integrated is used.

The two-stage method is a method in which a preform is injection-molded and then cooled to a temperature equal to or lower than the glass transition temperature of styrene-based resin and removed, and it is then heated to a blow molding temperature (for example, 90 to 120°C) in a separate blow molding device and subjected to blow molding. In the two-stage method, an injection molding device and a blow molding device are not integrated, but are each independently used.

The injection stretch-blow-molding method can be appropriately selected depending on components comprised in the preform and the like. The one-stage method is preferable in that it requires less energy for reheating than the two-stage method because it does not comprise a process of cooling the preform to a glass transition temperature or lower.

Next, a method of checking chemical attack in the toner stored in the toner bottle obtained by biaxial stretch-blow molding will be described.

The toner is stored in the toner bottle obtained by biaxial stretch-blow molding. The toner bottle containing the toner is left under a usage environment. In the chemical attack evaluation according to the present disclosure, the usage environment is set at 50°C for 72 hours, and the toner bottle is left in a thermostatic chamber for testing. The toner bottle left under a usage environment is removed, and out of the toner stored in the toner bottle, only the toner attached to the inner surface of the bottle is removed and observed under an electron microscope.

In the present disclosure, after the toner is discharged from the bottle with the opening of the toner bottle facing downward, the toner attached to the inner surface of the bottle is attached to an adhesive tape, and only the toner attached to the inner surface of the bottle is removed.

When deformation on the surface of toner particles of the toner attached to the inner surface of the bottle is observed under an electron microscope, in the toner particles in which chemical attack has occurred, deformed parts can be observed on the surface in contact with the toner bottle. The deformed parts on the surface in contact with the toner bottle can be identified by the fact that they have less irregularities than surrounding areas in an image observed under an electron microscope.

### Image forming device

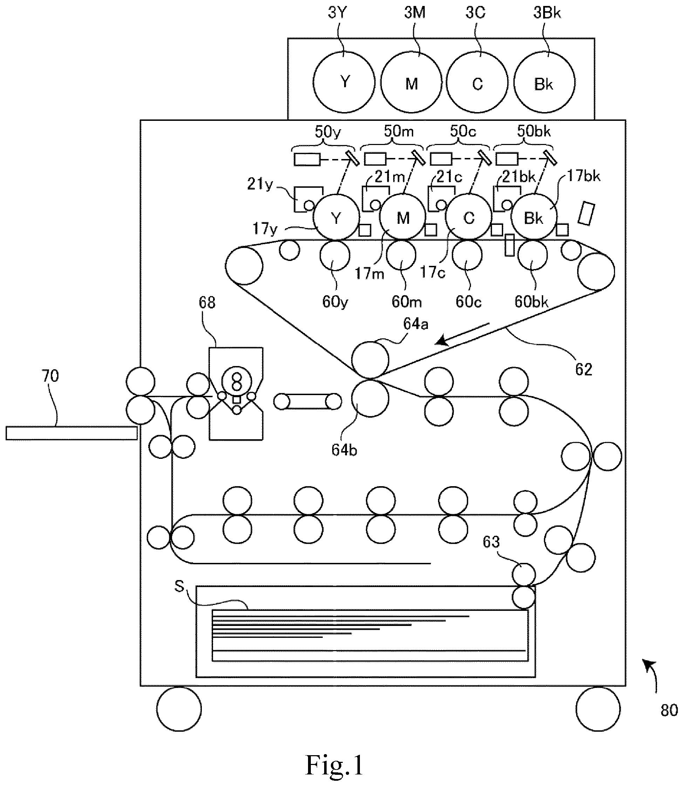

Hereinafter, an image forming device using a toner storage bottle obtained by the production method of the present disclosure will be described with reference to the drawings. FIG. 1 is a schematic configuration illustrative diagram showing a four-color image forming device using an electrophotographic method, and 80 in the drawing indicates a main body of the image forming device. An image forming device 80 is configured as a so-called intermediate transfer tandem type image forming device in which four-color image forming units are arranged side by side on an intermediate transfer belt.

The image forming device 80 performs image formation as follows. First, in the image forming device 80, an electrostatic latent image is formed on a photosensitive drum 17 (17y, 17m, 17c, 17bk) by an exposure device 50 (50y, 50m, 50c, 50bk) based on print data. Then, the formed electrostatic latent image is developed by a development device 21(21y, 21m, 21c, 21bk) to form a toner image.

The toner image is transferred onto an intermediate transfer component 62 by a primary transfer device 60 (60y, 60m, 60c, 60bk), and is transferred onto a sheet material S supplied from a paper-feeding device 63 in a secondary transfer unit 64 (64a, 64b). Next, the toner image transferred onto the sheet material S is fixed onto the sheet material S by a fixing device 68 and then discharged onto a paper discharge tray 70.

In the image forming device 80, as described above, a toner image is formed by developing it in the development device 21. In this case, in order to supply the toner to the development device 21, a detachable toner bottle 3 (3Y, 3M, 3C, 3Bk) can be used. The toner bottle produced by the production method of the present disclosure is a toner bottle used in this manner.

### Examples

The present disclosure will be described in detail next on the basis of examples and comparative examples. However, the present disclosure is not limited to these examples.

In the following examples and comparative examples, unless otherwise specified, "%" means "mass%."

### Production of a Toner Bottle

A toner bottle 3 (total length 439.5 mm, diameter 101 mm) illustrated in FIG. 6 was produced using a single-stage blow molding apparatus (ASB-70DPH by Nissei ASB Machine Co., Ltd.). The blow stretching ratio was set to "longitudinal stretch factor × transversal stretch factor = 6.7".

The "longitudinal stretch factor" of the blow stretching ratio is a value calculated by dividing the "total length after stretching" by the "total length (before stretching) of the portion of the preform (heated portion) that reaches the stretching temperature".

The "transversal stretch factor" of the blow stretching ratio is a value calculated by dividing the "diameter of the intermediate portions after stretching" by the "diameter (before stretching) of the intermediate portion of the preform".

Firstly the materials given in Table 1 below were melt-kneaded and pelletized, to produce to Masterbatch having a carbon black concentration of 5 mass%.

**[Table 1]**

| Material | Mixing ratio |
|---|---|
| Carbon black (product name: MA-100; by Mitsubishi Chemical Corporation) | 5 mass% |
| HIPS (product name: FP120; by Toyo Styrene Co., Ltd.) | 95 mass% |

Next, Masterbatch having a carbon black concentration of 5 mass%, prepared above, and HIPS, were mixed in the proportions given in Table 2 below, and were melt-kneaded and subsequently pelletized, to yield pellets of the resin mixture.

**[Table 2]**

| Material | Mixing ratio |
|---|---|
| Masterbatch with 5 mass% of Carbon black concentration | 1.4 mass% |
| HIPS (product name: FP120; by Toyo Styrene Co., Ltd.) | 98.6 mass% |

### Blow molding conditions

The resin mixture pellets were put into an extrusion molding device of a one-stage type blow molding device (product name: ASB-70DPH; commercially available from Nissei Asb Machine Co., Ltd.), and biaxial stretch-blow molding was performed to mold a toner bottle. Here, the one step stretch-blow-molding machine could perform a step of producing a preform having a test tube shape by injection molding and a step of biaxial stretch blow-molding the preform to produce a molded product having a bottle shape continuously. In addition, the screw diameter of the injection molding device in the molding device was 54 mm.

As a preform molding mold there was prepared first a mold capable of molding a preform having an outer diameter of 30 mm, a wall thickness of 3.7 mm, and a length of 220 mm. A preform was then molded under the following molding conditions.
- Screw diameter: 54 mm
- Screw position prior to filling of resin mixture into cavity: 95 mm
- Injection speed
   Up to 5 mm of screw advance: 50% of maximum speed
   Up to 20 mm of further screw advance: 30% of maximum speed
   Up to 35 mm of further screw advance: 25% of maximum speed
   PV switch position: 35 mm
- Injection pressure
   - Up to PV switch: 12.0 MPa
   - After PV switch: 4.5 MPa (pressure holding)
- Pressure holding time after PV switch
   - 4.57 seconds
- Heating cylinder temperature: 230°C
- Cooling time: 8.0 seconds
- Mold temperature: 18°C

Once a cooling time of 8.0 seconds had elapsed, the preform was thereafter demolded and was conveyed to a biaxial stretch blow station of the one-stage type blow molding device. The temperature of the preform during conveyance was controlled as follows.

### - Preform heating temperature

10% of the total length of the preform from the top thereof: 190°C
25% of the total length of the preform from the top thereof: 210°C
50% of the total length of the preform from the top thereof: 210°C
75% of the total length of the preform from the top thereof: 190°C

Next, the preform adjusted to the above temperature was put into a cylindrical mold having a size corresponding to the size of the toner bottle and adjusted to a temperature of 18°C, and biaxial stretch-blow molding was performed to produce a blow bottle. The temperature of the preform during transportation was controlled by heating, and the surface temperature of the center of the preform immediately before it was put into the cylindrical mold was 110°C.

First, a stretching rod at a retreating position was inserted into the preform through the opening of the preform and was advanced until it came into contact with the top of the preform. Next, the air pressure at which the stretching rod was driven was set to 1.2 MPa, and the stretching rod was further advanced. Next, 0.5 seconds after further advancement of the stretching rod started, primary air was introduced into the preform through the opening of the preform. The pressure of the primary air was 1.0 MPa.

Next, secondary air was introduced 0.15 seconds after the primary air was introduced. The pressure of the secondary air was 2.9 MPa. Then, air was introduced into the preform for 7.0 seconds from when introduction of the primary air started. Next, the pressure in the preform was returned to atmospheric pressure over 2.5 seconds. Accordingly, a toner bottle was produced by blow molding. 200 toner bottles were prepared by the above method. Here, this toner bottle was a toner bottle using virgin HIPS that has not been recycled.

200 toner bottles using virgin HIPS were produced by the above method.

### Example 1

### Production of Recycled Pellets

200 unused toner cartridges filled with black toner (product name: toner NPG-26; commercially available from Canon Inc.) were prepared. The black toner comprised an ester-based wax. In addition, the content of the wax in the black toner was 6.9 parts by mass. The entire amount of the black toner in each toner cartridge was transferred to the 200 toner bottles prepared above. Then, the black toner inside was discharged through the opening of the toner bottle facing vertically downward. Even after this operation, a small amount of black toner was still attached to the inner wall of each toner bottle.

In this case, the amount of the black toner remaining in the toner bottle was 0.321 mass% (an average value of the 200 toner bottles) based on the mass of the main body of the toner bottle. Here, the mass of the main body of the toner bottle is the mass of only the toner bottle and the toner remaining inside the toner bottle after all supply parts attached to the toner bottle were removed.

Next, each toner bottle with toner attached to the inner surface was pulverized into a size of about 5 to 10 mm square using a pulverizing machine to obtain a pulverized product (hereinafter referred to as a flake product). This flake product was melt-kneaded using a twin-screw extruder (PC-46 commercially available from Ikegai) at a temperature of 210°C, a screw rotational speed of 200 rpm, a vent degassing of - 0.08 MPa, and a discharge rate of 50 kg/h and then pelletized. The obtained recycled pellets were used as MR-HIPS (1-1).

### Production of Blow Bottle

A polycarbodiimide compound was added to MR-HIPS (1-1), and using the one-stage type blow molding device, biaxial stretch-blow molding was performed under the same blow mold conditions as above. The polycarbodiimide compound was diluted and prepared in advance as masterbatch pellets so that they were easily uniformly stirred in a blender. Specifically, the polycarbodiimide compound and the virgin material HIPS were mixed at a ratio shown in Table 3, melt-kneaded and then pelletized to prepare polycarbodiimide masterbatch pellets (second pellets).

**[Table 3]**

| Material | Mixing ratio |
|---|---|
| Polycarbodiimide compound (product name: Carbodilite HMV-15CA; Nisshinbo Chemical Inc.) | 10.0 mass% |
| HIPS (product name: FP120; by Toyo Styrene Co., Ltd.) | 90.0 mass% |

Before materials were put into the molding machine, 3.0 mass% of polycarbodiimide masterbatch pellets (second pellets) were added to MR-HIPS (1-1) (first pellets), and uniformly stirred in a blender. Since the polycarbodiimide masterbatch pellets were diluted in a proportion shown in Table 3, the amount of polycarbodiimide added was a substantial proportion of 0.3 mass%.

The materials stirred in a blender were put into the blow molding device, and biaxial stretch-blow molding was performed under the same blow mold conditions as above. The obtained toner bottle was used as a toner bottle (1-1). The toner was stored in the toner bottle (1-1) and left under a usage environment at 50°C for 72 hours. Then, the toner attached to the inner surface of the toner bottle was removed, and the surface of toner particles was observed under an electron microscope. As a result, no deformation on the surface of the toner particles was observed and it was confirmed that no chemical attack occurred.

### Examples 2 and 3

Toner bottles (1-2) and (1-3) were produced in the same manner as in Example 1 except that the mixing ratio of MR-HIPS (1-1) and the polycarbodiimide masterbatch was changed as shown in Table 1.

**[Table 4]**

| Example | Molded article | Mixing ratio (mass%) | | Amount of carbodiimide compound added with respect to 100 parts by mass of wax (parts by mass) | Substantial amount of polycarbodiimide added (mass%) | Chemical attack |
|---|---|---|---|---|---|---|
| | | MR-HIPS (1-1) | Polycarbodiimide masterbatch | | | |
| 1 | Toner bottle (1-1) | 97.0 | 3.0 | 1396.0 | 0.3 | Not occurred |
| 2 | Toner bottle (1-2) | 98.0 | 2.0 | 921.0 | 0.2 | Not occurred |
| 3 | Toner bottle (1-3) | 99.0 | 1.0 | 456.0 | 0.1 | Not occurred |

In the toner bottles (1-1), (1-2) and (1-3), the toner bottle was pulverized and melt-kneaded to form first pellets, before they were put into the molding machine, and mixed with polycarbodiimide compound second pellets (masterbatch pellet) prepared in advance.

### Example 4

### Production of Recycled Pellets

0.3 mass% of a polycarbodiimide compound (product name: Carbodilite HMV-15CA; commercially available from Nisshinbo Chemical Inc.) was uniformly added to a flake product prepared in the same manner as in Example 1, and the mixture was melt-kneaded using a twin-screw extruder (PC-46 commercially available from Ikegai) at a temperature of 230°C, a screw rotational speed of 200 rpm, a vent degassing of -0.08 MPa, and a discharge rate of 50 kg/h and then pelletized. The polycarbodiimide used here was in the form of a powder, and not masterbatch pellets. The obtained recycled pellets were used as MR-HIPS (2-1).

### Production of Blow Bottle

MR-HIPS (2-1) was put into the one-stage type blow molding device, and biaxial stretch-blow molding was performed under the same blow mold conditions as described above. Since a polycarbodiimide was added during the procedure of extruding MR-HIPS (2-1), unlike Examples 1 to 3, when materials were put into the blow molding machine, no polycarbodiimide was added. The obtained toner bottle was used as a toner bottle (2-1).

The toner was stored in the toner bottle (2-1) and left under a usage environment (50°C, 72 hours), and the environment test was performed. The toner attached to the inner surface of the toner bottle after the test was observed by the above method, and as a result, no deformation on the surface of the toner particles was observed and it was confirmed that no chemical attack occurred.

### Examples 5 and 6

MR-HIPS (2-2) and (2-3) pellets were prepared in the same manner as in MR-HIPS (2-1) in Example 4 except that the formulation proportion of the polycarbodiimide was changed as shown in Table 5.

**[Table 5]**

| Material | Mixing ratio (mass%) | |
|---|---|---|
| | Flake product | Polycarbodiimide |
| MR-HIPS (2-1) | 99.7 | 0.3 |
| MR-HIPS (2-2) | 99.8 | 0.2 |
| MR-HIPS (2-3) | 99.9 | 0.1 |

The obtained pellets were biaxial stretch-blow-molded under the same conditions as in Example 4 to obtain toner bottles (2-2) and (2-3). The toner was stored in each bottle and deformation on the surface of toner particles of the toner attached to the inner surface of the toner bottle after being left at 50°C for 72 hours was observed. The toner bottle (2-2) was evaluated as Example 5, and the toner bottle (2-3) was evaluated as Example 6.

As a result, in Examples 5 and 6, no deformation on the surface of the toner particles was observed and it was confirmed that no chemical attack occurred.

In Examples 4 to 6, a carbodiimide compound was added when the pulverized toner bottle product (flake) with toner attached was melt-kneaded and pelletized using an extruder without preparing masterbatch pellets. In this method, it was thought that the wax and the carbodiimide compound were sufficiently kneaded in the extruder, and the reaction between the wax and the carbodiimide compound sufficiently proceeded. Therefore, it was thought that transfer of the wax to the inner surface of the toner bottle was sufficiently prevented, and chemical attack was inhibited.

Table 6 shows the evaluation results of chemical attack after toner bottles of Examples 4 to 6 were molded.

**[Table 6]**

| Example | Molded article | Material | Amount of carbodiimide compound added with respect to 100 parts by mass of wax (parts by mass) | Amount of polycarbodiimide added (mass%) | Chemical attack |
|---|---|---|---|---|---|
| 4 | Toner bottle (2-1) | MR-HIPS (2-1) | 1359 | 0.3 | Not occurred |
| 5 | Toner bottle (2-2) | MR-HIPS (2-2) | 905 | 0.2 | Not occurred |
| 6 | Toner bottle (2-3) | MR-HIPS (2-3) | 452 | 0.1 | Not occurred |

As described above, in the toner bottles (2-1), (2-2) and (2-3), in the process of pulverizing a toner bottle and melt-kneading it to form pellets, a polycarbodiimide was added.

### Comparative Example 1

### Production of Recycled Pellets

A flake product prepared in the same manner as in Example 4 was melt-kneaded at a temperature of 230°C, a screw rotational speed of 200 rpm, a vent degassing of -0.08 MPa, and a discharge rate of 50 kg/h, and then pelletized. During melt-kneading, no polycarbodiimide compound was added. The obtained recycled pellets were used as MR-HIPS (2-4).

### Production of blow bottle

MR-HIPS (2-4) was put into the above one-stage type blow molding device and biaxial stretch-blow-molded under the same blow molding conditions as above. The obtained toner bottle was used as a toner bottle (2-4).

The toner was stored in the toner bottle (2-4) and left under a usage environment (50°C, 72 hours), and the environment test was performed. The toner attached to the inner surface of the toner bottle after the test was observed by the above method, and as a result, deformation on the surface of the toner particles was observed and it was confirmed that chemical attack occurred.

**[Table 7]**

| | Molded article | Mixing ratio (mass%) | | Chemical attack |
|---|---|---|---|---|
| | | MR-HIPS (2-4) | Polycarbodiimide | |
| Comparative Example 1 | Toner bottle (2-4) | 100.0 | 0.0 | Occurred |

While the present invention has been described with reference to exemplary embodiments, it is to be understood that the invention is not limited to the disclosed exemplary embodiments.

## Claims

1. A method of producing a stretch-blow-molded article, comprising:
a process of producing a preform from a melt-kneaded product of a resin mixture comprising at least a wax, a styrene-based resin and a carbodiimide compound; and
a process of stretch-blow molding the preform to produce the stretch-blow-molded article,
**characterized in that**
the styrene-based resin is at least one selected from the group consisting of high impact polystyrene and styrene-based alloys obtained from raw materials to which toner is attached.

2. The method of producing a stretch-blow-molded article according to claim 1,
wherein a content of the carbodiimide compound in the resin mixture is 114 to 1141 parts by mass with respect to 100 parts by mass of the wax.

3. The method of producing a stretch-blow-molded article according to claim 1 or 2,
wherein the wax is an ester-based wax.

4. The method of producing a stretch-blow-molded article according to any one of claims 1 to 3,
wherein the resin mixture comprises a material-recycled polystyrene.

5. The method of producing a stretch-blow-molded article according to claim 4,
wherein the material-recycled polystyrene comprises the wax.

6. The method of producing a stretch-blow-molded article according to any one of claims 1 to 5,
wherein the stretch-blow-molded article is a toner bottle.

7. The method of producing a stretch-blow-molded article according to any one of claims 1 to 6, wherein
the preform has a test tube shape, and
the process of producing a stretch-blow-molded article comprises:
a process of stretching the preform in a longitudinal direction of the preform by using a stretching rod; and
a process of introducing a gas into the preform stretched in the longitudinal direction and stretching the preform in a circumferential direction.

8. The method of producing a stretch-blow-molded article according to any one of claims 1 to 7,
wherein the process of producing the preform comprises:
a process of preparing pellets of the melt-kneaded product of the resin mixture; and
a process of molding the preform from the pellets.

9. The method of producing a stretch-blow-molded article according to claim 8,
wherein the process of molding the preform comprises a process of injection-molding the pellets.

10. The method of producing a stretch-blow-molded article according to any one of claims 1 to 7,
wherein the process of producing the preform comprises:
a process of preparing first pellets comprising the wax and the styrene-based resin;
a process of forming second pellets comprising a melt-kneaded product of the carbodiimide compound and a styrene-based resin B; and
a process of injection-molding a melt-kneaded product of a mixture of the first pellets and the second pellets.

## Patentansprüche

1. Verfahren zur Herstellung eines streckblasgeformten Artikels, das umfasst:
einen Prozess zur Herstellung einer Vorform aus einem schmelzgekneteten Produkt einer Harzmischung, die mindestens ein Wachs, ein Styrol-basiertes Harz und eine Carbodiimidverbindung umfasst; und
ein Verfahren zum Streckblasformen des Vorformlings, um den streckblasgeformten Artikelherzustellen,
**dadurch gekennzeichnet, dass**
das Styrol-basierte Harz mindestens eines ist ausgewählt aus der Gruppe bestehend aus hochschlagfestem Polystyrol und Styrol-basierten Legierungen, di erhalten aus Rohmaterialien, an denen Toner haftet.

2. Verfahren zur Herstellung eines streckblasgeformten Artikels nach Anspruch 1,
wobei ein Gehalt der Carbodiimidverbindung in der Harzmischung 114 bis 1141 Massenteile, bezogen auf 100 Massenteile des Wachses, beträgt.

3. Verfahren zur Herstellung eines streckblasgeformten Artikels nach Anspruch 1 oder 2,
wobei das Wachs ein Ester-basiertes Wachs ist.

4. Verfahren zur Herstellung eines streckblasgeformten Artikels nach einem der Ansprüche 1 bis 3,
wobei die Harzmischung ein Material-recyceltes Polystyrol umfasst.

5. Verfahren zur Herstellung eines streckblasgeformten Artikels nach Anspruch 4,
wobei das Material-recycelte Polystyrol das Wachs umfasst.

6. Verfahren zur Herstellung eines streckblasgeformten Artikels nach einem der Ansprüche 1 bis 5,
wobei der streckblasgeformte Artikel eine Tonerflasche ist.

7. Verfahren zur Herstellung eines streckblasgeformten Artikels nach einem der Ansprüche 1 bis 6, wobei
der Vorformling eine Reagenzglasform aufweist, und
der Prozess zur Herstellung eines streckblasgeformten Artikels umfasst:
einen Prozess zum Strecken des Vorformlings in Längsrichtung des Vorformlings unter Verwendung einer Streckstange; und
einen Prozess zum Einleiten eines Gases in den in Längsrichtung gestreckten Vorformling und zum Strecken des Vorformlings in Umfangsrichtung.

8. Verfahren zur Herstellung eines streckblasgeformten Artikels nach einem der Ansprüche 1 bis 7,
wobei der Prozess zur Herstellung der Vorformling umfasst:
einen Prozess zum Anfertigen von Pellets aus dem schmelzgekneteten Produkt der Harzmischung; und
ein Verfahren zum Formen des Vorformlings aus den Pellets.

9. Verfahren zur Herstellung eines streckblasgeformten Artikels nach Anspruch 8,
wobei der Prozess des Formens des Vorformlings einen Prozess des Spritzgießens der Pellets umfasst.

10. Verfahren zur Herstellung eines streckblasgeformten Artikels nach einem der Ansprüche 1 bis 7,
wobei der Prozess der Herstellung des Vorformlings umfasst:
einen Prozess zum Anfertigen erster Pellets, die das Wachs und das Styrol-basierte Harz umfassen;
einen Prozess zum Bilden zweiter Pellets, die ein schmelzgeknetetes Produkt der Carbodiimidverbindung und eines Styrol-basierten Harzes B umfassen; und
einen Prozess zum Spritzgießen eines schmelzgekneteten Produkts einer Mischung aus den ersten Pellets und den zweiten Pellets.

## Revendications

1. Procédé de production d'un article moulé par soufflage-étirage, comprenant :
un processus de production d'une préforme à partir d'un produit malaxé à l'état fondu d'un mélange de résine comprenant au moins une cire, une résine à base de styrène et un composé carbodiimide ; et
un processus de moulage par soufflage-étirage de la préforme pour produire l'article moulé par soufflage-étirage,
**caractérisé en ce que**
la résine à base de styrène est au moins l'une sélectionnée parmi le groupe consistant en le polystyrène choc et les alliages à base de styrène obtenus à partir de matières premières auxquelles un toner est fixé.

2. Procédé de production d'un article moulé par soufflage-étirage selon la revendication 1,
dans lequel une teneur du composé carbodiimide dans le mélange de résine est de 114 à 1141 parties en masse par rapport à 100 parties en masse de la cire.

3. Procédé de production d'un article moulé par soufflage-étirage selon la revendication 1 ou 2,
dans lequel la cire est une cire à base d'ester.

4. Procédé de production d'un article moulé par soufflage-étirage selon l'une quelconque des revendications 1 à 3,
dans lequel le mélange de résine comprend un polystyrène issu de matières recyclées.

5. Procédé de production d'un article moulé par soufflage-étirage selon la revendication 4,
dans lequel le polystyrène issu de matières recyclées comprend la cire.

6. Procédé de production d'un article moulé par soufflage-étirage selon l'une quelconque des revendications 1 à 5,
dans lequel l'article moulé par soufflage-étirage est un flacon de toner.

7. Procédé de production d'un article moulé par soufflage-étirage selon l'une quelconque des revendications 1 à 6, dans lequel
la préforme possède une forme de tube à essai, et
le processus de production d'un article moulé par soufflage-étirage comprend :
un processus d'étirage de la préforme dans une direction longitudinale de la préforme à l'aide d'une tige d'étirage ; et
un processus d'introduction d'un gaz dans la préforme étirée dans la direction longitudinale et d'étirage de la préforme dans une direction circonférentielle.

8. Procédé de production d'un article moulé par soufflage-étirage selon l'une quelconque des revendications 1 à 7,
dans lequel le processus de production de la préforme comprend :
un processus de préparation de granulés du produit malaxé à l'état fondu du mélange de résine ; et
un processus de moulage de la préforme à partir des granulés.

9. Procédé de production d'un article moulé par soufflage-étirage selon la revendication 8,
dans lequel le processus de moulage de la préforme comprend un processus de moulage par injection des granulés.

10. Procédé de production d'un article moulé par soufflage-étirage selon l'une quelconque des revendications 1 à 7,
dans lequel le processus de production de la préforme comprend :
un processus de préparation de premiers granulés comprenant la cire et la résine à base de styrène ;
un processus de formation de seconds granulés comprenant un produit malaxé à l'état fondu du composé carbodiimide et d'une résine à base de styrène B ; et
un processus de moulage par injection d'un produit malaxé à l'état fondu d'un mélange des premiers granulés et des seconds granulés.
